# EUROPÄISCHE PATENTSCHRIFT

(11) **EP 4 006 411 B1**
(45) Veröffentlichungstag und Bekanntmachung des Hinweises auf die Patenterteilung: **25.02.2026**
(21) Anmeldenummer: 20210245.5
(22) Anmeldetag: 27.11.2020
(51) Int. Cl.: F21S 43/237, F21S 43/245, F21S 43/247, F21S 43/243, F21S 43/14, F21S 43/20, F21V 8/00

(54) **BELEUCHTUNGSVORRICHTUNG FÜR EIN KRAFTFAHRZEUG SOWIE KRAFTFAHRZEUGSCHEINWERFER MIT EINER SOLCHEN BELEUCHTUNGSVORRICHTUNG**
LIGHTING DEVICE FOR A MOTOR VEHICLE AS WELL AS A MOTOR VEHICLE'S HEADLAMP WITH SUCH A LIGHTING DEVICE
DISPOSITIF D'ILLUMINATION POUR UN VÉHICULE AUTOMOBILE AINSI QUE UN PROJECTEUR DE VÉHICULE AVEC UN TEL DISPOSITIF D'ILLUMINATION

(43) Veröffentlichungstag der Anmeldung: 01.06.2022
(73) Patentinhaber: ZKW Group GmbH, 3250 Wieselburg (AT)
(72) Erfinder: Maier, Christian, 3281 Oberndorf an der Melk (AT)
(74) Vertreter: Patentanwaltskanzlei Matschnig & Forsthuber OG

(56) Entgegenhaltungen:
- EP-A1- 3 190 332
- DE-A1- 102015 105 168
- US-A1- 2006 050 282
- US-A1- 2008 225 548
- US-A1- 2018 224 083

## Beschreibung

Die Erfindung betrifft eine Beleuchtungsvorrichtung für ein Kraftfahrzeug zur Erzeugung von zumindest einer Beleuchtungsfunktion und/oder Signalisierungsfunktion, wobei die Beleuchtungseinheit ein Gehäuse mit einer Gehäuseöffnung aufweist, wobei die Gehäuseöffnung beispielsweise von einer Abdeckscheibe verschlossen ist, wobei in dem Gehäuse
- zumindest ein langgestreckter Lichtleiter und zumindest eine dem zumindest einen Lichtleiter zugeordnete Lichtquelle angeordnet sind, wobei Licht der zumindest einen Lichtquelle über einen Einkoppelbereich des zumindest einen Lichtleiters in den Lichtleiter eingekoppelt werden kann,
- wobei der zumindest eine Lichtleiter an seiner Vorderseite eine Lichtauskoppelfläche und an einer der Vorderseite gegenüberliegenden Rückseite eine Lichtumlenkfläche aufweist, sodass von der zumindest einen Lichtquelle in den zumindest einen Lichtleiter eingekoppeltes Licht an der Lichtumlenkfläche umgelenkt und über die Lichtauskoppelfläche aus dem Lichtleiter abgestrahlt wird,
wobei
der zumindest eine Lichtleiter in einem Endabschnitt eine den Lichtleiter begrenzende Abschlussfläche aufweist, und wobei die Beleuchtungsvorrichtung weiters eine Optik, etwa eine Streuscheibe oder eine Dickwandoptik, umfasst, welche in Lichtaustrittsrichtung nach der Lichtauskoppelfläche des Lichtleiters angeordnet ist.

Weiters betrifft die Erfindung eine oben genannte Beleuchtungsvorrichtung, welche als Kraftfahrzeugscheinwerfer ausgebildet ist.

Schließlich betrifft die Erfindung noch einen Kraftfahrzeugscheinwerfer, welcher eine oder mehrere der oben genannten Beleuchtungsvorrichtungen aufweist.

Langgestreckte Leitleiter finden im Kraftfahrzeugscheinwerferbau häufig Verwendung, beispielsweise zur Erzeugung von Standlichtverteilungen oder Tagfahrlichtverteilung, oder zur Erzeugung von Signalisierungsfunktionen, z.B. einer Blinklichtfunktion. Unter dem Begriff "langgestreckt" oder "länglich" ist dabei zu verstehen, dass die Längserstreckung des Lichtleiters (also die Erstreckung in Lichtausbreitungsrichtung in dem Lichtleiter) deutlich größer ist, z.B. mindestens 5 mal oder mindestens 10 mal größer als die Quererstreckung (bei der Quererstreckung handelt es sich z.B. um den oder einen, z.B. den größten, oder den kleinsten, oder einen durchschnittlichen Durchmesser des Lichtleiters). Bei der vorliegenden Erfindung weist der verwendete Lichtleiter zwei offene Enden auf, an einem Ende wird das Licht einer Lichtquelle eingekoppelt, während an dem anderen offenen Ende keine Lichteinkopplung stattfindet. Von der Erfindung umfasst sind natürlich auch Fälle, wo z.B. zwei (oder mehr) Lichtleiter in einen gemeinsamen Einkoppelbereich münden, und Licht einer Lichtquelle, welches in diesen gemeinsamen Einkoppelbereich eingekoppelt wird, in bekannter Weise, z.B. mittels geeigneter Umlenkmittel wie Umlenkprismen, in die zwei oder mehr Lichtleiter gelenkt wird. Der Einkoppelbereich stellt in diesem Fall für jeden der Lichtleiter das jeweils eine offene Ende dar, das dem Einkoppelbereich abgewandte offene Ende jedes Lichtleiters stellt sein zweites offenes Ende dar.

Beispielsweise zeigen die US 2008/225548 A1, EP 3 190 332 A1 sowie US 2006/050282 A1 Beleuchtungsvorrichtungen für Kraftfahrzeugscheinwerfer, bei welchen langgestreckte Lichtleiter zum Einsatz kommen.

Licht, welches in den Lichtleiter eingekoppelt wird, pflanzt sich in Folge von Totalreflexion in Längsrichtung des Lichtleiters fort. Zum gezielten Auskoppeln von Licht aus dem Lichtleiter ist an seiner Rückseite eine Lichtumlenkfläche vorgesehen, welche derart gestaltet ist, dass in bekannter Weise Licht zu der Lichtauskoppelfläche umgelenkt wird und dort unter einem Winkel auftrifft, dass das Licht aus dem Lichtleiter austreten kann.

Die Lichtumlenkfläche umfasst typischer Weise eine prismatische Struktur. Generell kann die Lichtumlenkfläche derart ausgebildet werden, dass die Lichtumlenkung zu der Lichtauskoppelfläche derart erfolgt, dass sich ein weitestgehend kontinuierliches bzw. homogenes Warmerscheinungsbild des Lichtleiters ergibt. D.h., der Lichtleiter erscheint für einen Betrachter von außen im eingeschalteten Zustand der Lichtquelle gleichmäßig leuchtend. Üblicherweise ist dabei gewünscht, dass der Lichtleiter über seine ganze Länge möglichst gleich hell erscheint, es kann auch gewünscht sein, dass z.B. die Helligkeit zum Ende hin abnimmt. Wichtig ist aber ein möglichst kontinuierliches Warmescheinungsbild.

Allerdings bleibt am Ende eines Lichtleiters immer eine gewisse Menge an Licht "übrig". Dabei handelt es sich im Wesentlichen um Lichtstrahlen, deren Auftreffwinkel den Winkel der Totalreflexion im gesamten Lichtleiterverlauf nicht überschritten hat. Dies lässt sich auch nicht vermeiden, da andernfalls, wenn das gesamte Licht über die Lichtumlenkfläche umgelenkt und ausgekoppelt würde, der Lichtleiter zum Ende hin dunkel erscheinen würde, was aber nicht zulässig und unerwünscht ist, da beispielsweise von Seiten der Fahrzeughersteller Vorgaben an die Homogenität, etwa Limits für den maximalen Leuchtdichteunterschied der leuchtenden Fläche des Lichtleiters, vorgegeben werden.

An der Abschlussfläche, welche den Lichtleiter an dem der Lichtquelle abgewandten Ende bzw. Endbereich abschließt, kommt es nun zu Lichtreflexionen dieses "übriggebliebenen" Lichtes. Durch diese Reflexionen an der Abschlussfläche kommt es somit in der Regel zu einem signifikanten Anstieg der Lichtintensität in einem Endabschnitt des Lichtleiters, und dieses reflektierte Licht tritt zumindest zum Teil in dem Endabschnitt des Lichtleiters über dessen Lichtauskoppelfläche aus. Dies resultiert in typischerweise einem, gelegentlich auch mehreren Hotspots, die in der leuchtenden Fläche des Lichtleiters sichtbar sind, sodass das Warmerscheinungsbild des Lichtleiters negativ beeinträchtigt werden kann bzw. wird. Unter einem Hotspot wird typischer Weise ein eng abgegrenzter Bereich mit hoher Leuchtdichte in einer im Vergleich zu diesem Bereich hoher Leuchtdichte dunkleren Fläche, d.h. einer Fläche von geringerer Leuchtdichte, verstanden.

Ein solcher Hotspot fällt stark auf, wirkt im Erscheinungsbild störend und beeinflusst in nachteiliger Weise das Erscheinungsbild des Lichtleiters bei eingeschalteter Lichtquelle für einen Betrachter außerhalb des Kraftfahrzeuges, da die Homogenität des Erscheinungsbildes durch einen solchen Hotspot (oder durch mehrere) gestört wird.

Zur Lösung des oben beschriebenen Problems sind z.B. im Stand der Technik Blenden vorgesehen, mittels welcher der problematische Endabschnitt des Lichtleiters abgedeckt werden kann, sodass der oder die Hotspots nicht erkennbar sind, oder der Lichtleiter endet mit seinem Endabschnitt in einem Scheinwerfergehäuse derart, dass der Endabschnitt für einen Betrachter nicht sichtbar ist.

Dadurch wird allerdings die effektive Länge des Lichtleiters verringert, der Lichtleiter wird optisch verkürzt, und entsprechend kann der in einem Kraftfahrzeug in der Regel ohnehin knapp bemessene Bauraum nicht optimal ausgenutzt werden.

Weiters resultiert daraus, dass der Lichtleiter eine geringere effektive Lichtaustrittsfläche aufweist und damit bei gleicher Leistung der Lichtquelle weniger Licht emittiert als ein identischer Lichtleiter, der nicht von einer Blende abgedeckt wird.

Außerdem ist noch nachteilig, dass eine solche Blende Bauraum benötigt, der in modernen Kraftfahrzeugen ohnehin stark eingeschränkt ist oder im Scheinwerfergehäuse kein Bauraum zum Verbergen des Lichtleiterendes vorhanden ist.

Es ist eine Aufgabe der Erfindung, eine Lösung für die oben genannten Probleme anzugeben.

Diese Aufgabe wird mit einer eingangs genannten Beleuchtungsvorrichtung für ein Kraftfahrzeug dadurch gelöst, dass die Form der Abschlussfläche der Form einer virtuellen Grundfläche folgt, wobei die Form der virtuellen Grundfläche der Abschlussfläche einer Kontur einer Endfläche der Optik folgt, insbesondere mit dieser in einer gemeinsamen Ebene liegt, und wobei die virtuelle Grundfläche, beispielsweise eine Ebene, schräg zu einer zentralen Längsachse des Lichtleiters geneigt ist, und wobei zumindest in Bereichen der virtuellen Grundfläche gezielte Abweichungen von der Form der virtuellen Grundfläche vorgesehen sind, indem mehrere Optikflächensegmente vorgesehen sind, wobei die Abschlussfläche in den Bereichen, wo eine gezielte Abweichung vorliegt, von den Optikflächensegmenten gebildet ist und in den Bereichen ohne Abweichung der virtuellen Grundfläche entspricht, und wobei die Optikflächensegmente zu der virtuellen Grundfläche geneigt angeordnet sind, sodass
- aus einem, mehreren oder vorzugsweise aus jedem Optikflächensegment mehr Licht aus dem Lichtleiter austreten kann als über ein zu dem jeweiligen Optikflächensegment korrespondierendes virtuelles Grundform-Flächensegment, und/oder
- ein, mehrere oder vorzugsweise jedes Optikflächensegment Licht, welches sich in dem Lichtleiter bis zu der Abschlussfläche fortpflanzt, derart reflektiert, dass in einem Endabschnitt des Lichtleiters die pro Flächeneinheit aus der Lichtauskoppelfläche austretende Lichtmenge geringer ist als dies bei Reflexion an der virtuellen Grundfläche der Fall wäre,
und wobei die Abschlussfläche in einem Randbereich, insbesondere in einem umlaufenden, in sich geschlossenen Randbereich, welcher die Optikflächensegmente umschließt, der virtuellen Grundfläche entspricht, wobei in dem Randbereich eine Narbung, z.B. eine regelmäßig oder unregelmäßig geometrische Narbung, vorgesehen ist.

Der Begriff "Abschlussfläche" bezeichnet eine reale, optisch wirksame Fläche (= "Wirkfläche"), welche den Lichtleiter nach Außen abgrenzt und an welcher Licht reflektiert wird und/oder aus dem Lichtleiter austreten kann.

Die Länge des Endabschnittes, von der Abschlussfläche weg gemessen, kann beispielsweise in etwa das 2 bis 6-fache, insbesondere ca. das 4-fache eines Durchmessers des Lichtleiters betragen. Dieser Durchmesser kann ein minimaler Durchmesser, ein maximaler Durchmesser, ein durchschnittlicher Durchmesser oder ein Durchmesser an einer bestimmten Stelle des Lichtleiters sein.

Mit der Erfindung kann das "Verhalten" des Lichts an der Abschlussfläche gezielt gesteuert werden, sodass sich Hotspots vermeiden oder zumindest die Leuchtdichte in dem oder den Hotspots deutlich reduzieren lässt, sodass diese in der leuchten Fläche des Lichtleiters nicht mehr störend auffallen.

Gleichzeitig kann es dabei möglich sein, die virtuelle Grundfläche z.B. an eine dem Lichtleiter nachgeordnete Optik, welche von dem Lichtleiter beleuchtet wird, und/oder die Scheinwerfer-Gehäuseform anzupassen.

Mit der Erfindung wird es somit möglich, auch bei vorgegebener Form des Endes des Lichtleiters und/oder bei vorgegebener Form der Abschlussfläche Hotspots deutlich zu reduzieren oder zu vermeiden.

Es kann vorgesehen sein, dass die Optikflächensegmente derart von der virtuellen Grundfläche abweichen, dass in einem Endbereich des Lichtleiters, in Richtung der Längserstreckung des Lichtleiters gesehen, das reflektierte Licht in einen größeren Bereich reflektiert wird als dies bei der virtuellen Grundfläche der Fall wäre.

Auf diese Weise kann das reflektierte Licht über einen größeren Bereich verteilt werden, sodass die Leuchtdichte reduziert und so Hotspots vermieden oder abgemildert werden können.

Insbesondere kann vorgesehen sein, dass die Optikflächensegmente zu der virtuellen Grundfläche geneigt angeordnet sind.

Insbesondere kann vorgesehen sein, dass jedes Optikflächensegment hinsichtlich seiner Neigung individuell angeordnet und/oder hinsichtlich seiner Form und/oder hinsichtlich seiner Größe, insbesondere der Größe seiner Fläche individuell ausgebildet ist.

Die Optikflächensegmente können hinsichtlich eines, mehrerer oder aller er oben angeführten Parameter (Neigung, Form, Größe) auch identisch ausgebildet sein, dies vereinfacht die Berechnung und/oder Herstellung. Eine individuelle Ausgestaltung der Optikflächensegmente hinsichtlich eines, mehrerer oder aller der oben angeführten Parameter kann eine noch zielgerichtetere Reduzierung bzw. Vermeidung von Hotspots erlauben.

Erfindungsgemäß ist vorgesehen, dass die Optikflächensegmente derart geneigt sind, dass mehr Licht aus dem jeweiligen Optikflächensegment austreten kann als Licht aus der jeweiligen virtuellen Grundform oder aus einem zu dem jeweiligen Optikflächensegment korrespondierenden virtuellen Grundform-Flächensegment austreten würde, und/oder Optikflächensegmente derart geneigt sind, dass in einem Endbereich des Lichtleiters, in Richtung der Längserstreckung des Lichtleiters gesehen, das reflektierte Licht in einen größeren Bereich reflektiert wird als diese bei der virtuellen Grundfläche oder bei einem zu dem jeweiligen Optikflächensegment korrespondierenden virtuellen Grundform-Flächensegment der Fall wäre.

Insbesondere kann dabei vorgesehen sein, dass die Optikflächensegmente jeweils unter einem Winkel, dessen Betrag größer 0° und kleiner 90° gegenüber einer zentralen Längsachse des Lichtleiters geneigt sind.

Die "zentrale Achse " des Lichtleiters ist dabei z.B. eine Achse in Längserstreckung des Lichtleiters, die jeweils die geometrischen Mittelpunkte der Querschnittsflächen entlang der Längserstreckung des Lichtleiters, welche normal auf diese Achse stehen, verbindet.

Es kann je nach Situation zielführend sein, das Licht an den Flächen gezielt in eine bestimmte Richtung zu reflektieren (Flächen sind in diesem Fall vorzugsweise im Bereich 0° bis 45° zur Mittellinie, d.h. zu einer zentralen Längsachse des Lichtleiters geneigt) oder durch diese in eine bestimmte Richtung gelenkt auszutreten (vorzugsweise 45° bis 90° Anstellwinkel).

Es kann vorgesehen sein, dass alle Optikflächensegmente in dieselbe Richtung geneigt sind, oder ein oder mehrere Optikflächensegmente der Optikflächensegmente sind in eine Richtung und die anderen Optikflächensegmente in die entgegengesetzte Richtung geneigt.

So kann das Licht auf einen größeren Winkelbereich "aufgeteilt" und dadurch die Intensität eines Hotspots in einer bestimmten Betrachtungs-Richtung, aus der ein externer Betrachter auf die Beleuchtungseinrichtung sieht, reduziert werden.

Weiters kann vorgesehen sein, dass zwischen den Optikflächensegmenten, aufgrund eines Versatzes der Oberflächensegmente zueinander in Richtung einer zentralen Längsachse des Lichtleiters, welcher beispielsweise durch eine Neigung der Optikflächensegmente zur virtuellen Grundfläche entsteht, Verbindungsflächen angeordnet sind.

Der Winkel der Verbindungsflächen bzw. Versatzflächen in Bezug auf die Längsachse des Lichtleiters kann bevorzugt bis 45° gehen. Auch größere Winkel können vorgesehen sein, sodass an derart geneigten Verbindungsflächen keine Reflexion, sondern ein Durchtreten der Lichtstrahlen mit entsprechender Lichtbrechung aus dem Lichtleiter heraus in eine gewünschte Richtung realisiert werden kann.

Beispielsweise kann vorgesehen sein, dass die virtuelle Grundfläche gekrümmt, z.B. parabolisch, hyperbolisch, oder der Form eines Ellipsoids folgend, oder plan geformt ist.

Es kann vorgesehen sein, dass die virtuelle Grundform aus einer oder mehreren Flächenbereichen gebildet ist, wobei vorzugsweise jeder Flächenbereich in sich stetig ist, und wobei unterschiedlichen Flächenbereiche beispielsweise unstetig, z.B. stufenförmig, aneinander anschließen bzw. ineinander übergehen.

Die virtuelle Grundfläche kann z.B. aus einer durchgehenden Fläche gebildet sein; die virtuelle Grundfläche kann auch aus zwei oder mehreren Einzelflächen gebildet sein. Benachbarte Einzelflächen der virtuellen Grenzfläche können stufenförmig aneinander angrenzen, bzw. ineinander übergehen. Vorzugsweise sind die Stufen in Richtung von der hinteren Rückseite des zumindest einen Lichtleiters zu seiner Vorderseite verlaufend. Ein oder mehrere oder alle dieser Einzelflächen können dann Optikflächensegmente enthalten, wie vorstehend beschrieben.

Die durchgehende Fläche oder die Einzelflächen können eben ausgebildet sein Beispielsweise sind die Einzelflächen parallel zueinander angeordnet. Die durchgehende Fläche oder die Einzelflächen sind unter einem definierten Winkel gegen die Längsachse geneigt. Auf diese Weise kann z.B. die virtuelle Basisfläche und somit die Abschlussfläche an eine Gestalt des Scheinwerfergehäuses und/oder anderer Optik-Elemente, z.B. an die Form einer dem Lichtleiter vorgesetzten Dickwandoptik, angepasst werden.

Es kann vorgesehen sein, dass die einzelnen Optikflächensegmente eben bzw. plan oder gekrümmt, z.B. parabolisch, hyperbolisch, oder der Form eines Ellipsoids folgend, geformt sind.

Es kann vorgesehen sein, dass die Optikflächensegmente in Bezug auf eine Lichtleiter-Vertikalebene und/oder in Bezug auf eine Lichtleiter-Horizontalebene geneigt sind.

In diesem Zusammenhang kann vorgesehen sein, dass manche der oder alle Optikflächensegmente in Bezug auf die Lichtleiter-Vertikalebene unter einem anderen Winkel geneigt sind als zu der Lichtleiter-Horizontalebene.

Die Lichtleiter-Vertikalebene ist eine Ebene, welche die Tangente an die zentrale Längsachse des Lichtleiters im Durchstoßpunkt durch die virtuelle Grundfläche enthält, wobei diese Ebene z.B. in etwa normal auf die Lichtabstrahlrichtung des Lichtleiters orientiert ist.

Die Lichtleiter-Horizontalebene H ist eine Ebene, welche die Tangente an die Längsachse des Lichtleiters im Durchstoßpunkt durch die virtuelle Grundfläche enthält, wobei diese Ebene normal auf die Lichtleiter-Vertikalebene orientiert ist.

Es sei an dieser Stelle angemerkt, dass die Bezeichnungen "vertikal" und "horizontal" dann korrekt sind, wenn der Lichtleiter in seiner Einbaulage in ein Kraftfahrzeug in etwa horizontal liegt, und beispielsweise quer zur Fahrtrichtung des Kraftfahrzeuges angeordnet ist. Wenn der Lichtleiter hingegen stehend angeordnet ist, sodass die Längserstreckung eher von oben nach unten verläuft, ist die hier als Lichtleiter-"Horizontal"ebene bezeichnete Ebene eine zweite Vertikalebene. Bei einer beliebig "verdrehten" Lage des Lichtleiters liegt weder die Lichtleiter-Vertikalebene vertikal noch liegt die Lichtleiter-Horizontalebene horizontal.

Beispielsweise ist vorgesehen, dass die Optikflächensegmente rasterartig in Zeilen und Spalten angeordnet sind.

Weiters ist erfindungsgemäß vorgesehen, dass die Abschlussfläche in einem Randbereich, insbesondere in einem umlaufenden, in sich geschlossenen Randbereich, welcher die Optikflächensegmente umschließt, der virtuellen Grundfläche entspricht, wobei in dem Randbereich eine Narbung, z.B. eine regelmäßig oder unregelmäßig geometrische Narbung, vorgesehen ist.

An diesem Randbereich, der fertigungstechnisch und/oder lichttechnisch sinnvoll und/oder notwendig sein kann, wird Licht nach wie vor in den Lichtleiter zurück reflektiert. Dies kann dazu genutzt werden, die Lichtmenge im Lichtleiter-Endbereich gezielt zu steuern. Falls zu viel Licht reflektiert wird, kann eine Narbung dahingehend Abhilfe schaffen, dass das reflektierte Licht stärker gestreut wird, sodass nachteilige Effekte durch eine Konzentration von Lichtstrahlen in einen bestimmten Bereich abgeschwächt oder vermieden werden, wodurch wiederum Hotspots vermieden oder reduziert werden können.

Unter "Narbung" wird generell eine Oberfläche bzw. Oberflächenstruktur verstanden, die derart ausgebildet, insbesondere unregelmäßig ausgebildet ist, Licht an dieser Oberfläche bzw. Oberflächenstruktur diffus reflektiert und/oder (beim Durchtritt) diffus gebrochen wird. Beispielsweise kann über die "Rauftiefe" der Narbung eingestellt werden, wie "grob" die Narbung bzw. Oberflächenstruktur ist.

Weiters ist erfindungsgemäß vorgesehen, dass eine Optik, etwa eine Streuscheibe oder eine Dickwandoptik, welche in Lichtaustrittsrichtung nach der Lichtauskoppelfläche des Lichtleiters angeordnet ist, wobei vorzugsweise die Form der virtuellen Grundfläche der Abschlussfläche einer Kontur einer Endfläche der Optik, insbesondere mit dieser in einer gemeinsamen Ebene liegt.

Diese Optik weist zumindest eine optische Lichteintrittsfläche auf, welche Lichteintrittsfläche dazu eingerichtet ist, einfallende Lichtstrahlen in die Optik hinein zu brechen. Licht bzw. Lichtstrahlen, welches aus der Lichtauskoppelfläche des Lichtleiters austreten, treffen auf die optische Wirkfläche der Optik, treten durch die Optik durch und treten an einer Lichtaustrittsfläche der Optik zur Bildung einer Signalisierungsfunktion und/oder einer Lichtverteilung wieder aus.

Beispielsweise ist optische Lichteintrittsfläche in Form einer Ebene ausgebildet ist, und/oder sie verläuft parallel zu der Lichtauskoppelfläche des Lichtleiters.

Es kann vorgesehen sein, dass die Optik mehrere optische Elemente, z.B. auf der optischen Lichteintrittsfläche und/oder einer der optischen Lichteintrittsfläche abgewandten Optik-Lichtaustrittfläche, aufweist, z.B. Mikrooptiken und/oder Polsteroptiken und/oder Facettenoptiken, wobei vorzugsweise die optischen Elemente auf der Wirkfläche dazu eingerichtet sind, einfallendes Licht zu streuen, und/oder wobei die optischen Element der Optik-Lichtaustrittfläche dazu einrichtet sind, das über die Optik-Lichtaustrittfläche austretende Licht so auszurichten, dass es in die geforderte Richtung abgestrahlt wird und/oder noch aufgefächert bzw. aufgestreut wird.

An ihrem seitlichen Ende, im Bereich des Lichtleiterendes bzw. der Abschlussfläche des Lichtleiters weist die Optik eine Endfläche auf. Vorzugsweise gehen die Form der virtuellen Grundfläche der Abschlussfläche und diese Endfläche "ineinander" über, d.h., wenn die virtuellen Grundfläche gedanklich verlängert würde, schließt sie direkt, insbesondere stetig an die Endfläche des Optik an. Auf diese Weise kann die gesamte Optik beleuchtet werden.

In anderen Worten ist vorzugsweise das Ende des Lichtleiters so abgeschrägt, dass der Beschnitt der Kontur der Optik folgt.

Die zumindest eine Lichtquelle ist beispielsweise als LED ausgebildet ist oder umfasst zumindest eine LED.

Die "zentrale Achse " eines Lichtleiters ist dabei eine Achse in Längserstreckung des Lichtleiters, die jeweils die geometrischen Mittelpunkte der Querschnittsflächen entlang der Längserstreckung des Lichtleiters, welche normal auf diese Achse stehen, verbindet.

Die oben genannte Aufgabe wird weiters mit einer oben beschriebenen Beleuchtungseinheit gelöst, welche als Kraftfahrzeugscheinwerfer ausgebildet ist.

Weiters wird die oben genannte Aufgabe mit einem Kraftfahrzeugscheinwerfer gelöst, welcher eine oder mehrere vorstehend beschriebene Beleuchtungsvorrichtungen aufweist.

Im Folgenden ist die Erfindung an Hand der Zeichnung näher erörtert. In dieser zeigt
Fig. 1 eine Vorderansicht einer erfindungsgemäßen Beleuchtungsvorrichtung mit zwei Lichtleitern in einer Explosionsdarstellung,
Fig. 2 einen Lichtleiter zur Verwendung in einer Beleuchtungsvorrichtung aus Figur 1,
Fig. 3 eine perspektivische Ansicht des Endbereiches eines erfindungsgemäßen Lichtleiters von schräg hinten,
Fig. 4 der Endbereich aus Figur 3 in einer vergrößerten Darstellung,
Fig. 5 die Darstellung aus Figur 3 in einer seitlichen Ansicht,
Fig. 6 eine schematische Draufsicht auf einen Lichtleiter mit vorgeschalteter Optik, und
Fig. 7 die Darstellung aus Figur 6 in einer Ansicht von Vorne in einer teilweise geschnittenen Darstellung.

Im Folgenden verwendete Richtungsangaben beziehen sich dabei jeweils auf den eingebauten Zustand der Beleuchtungseinheit in ein Kraftfahrzeug bzw. in einen Kraftfahrzeugscheinwerfer, welcher wiederum in ein Kraftfahrzeug eingebaut ist.

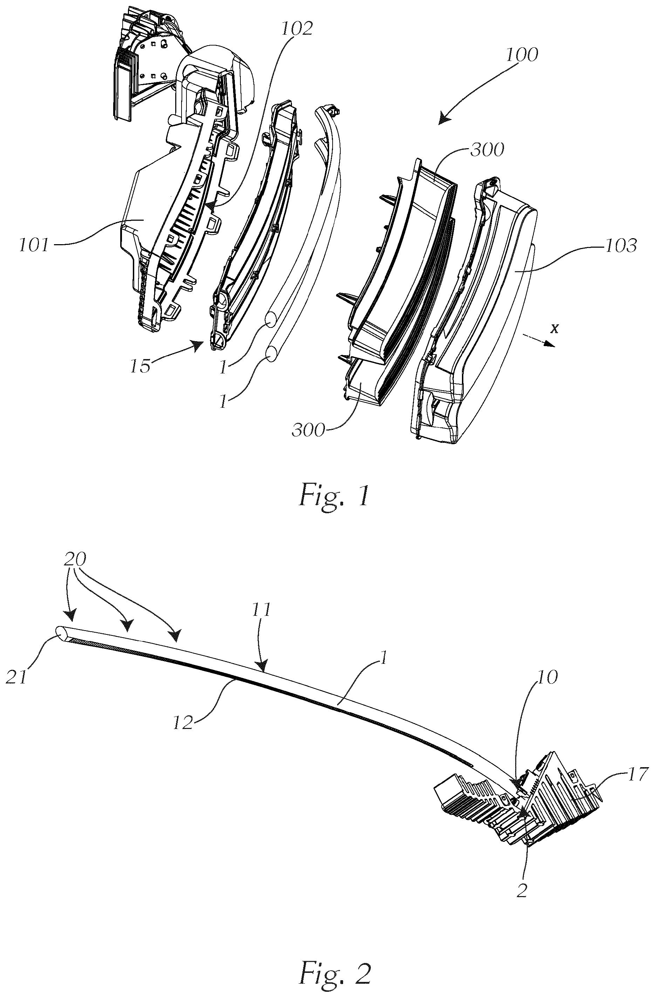

**Figur 1** zeigt eine Beleuchtungsvorrichtung 100 für ein Kraftfahrzeug zur Erzeugung von zumindest einer Beleuchtungsfunktion und/oder Signalisierungsfunktion, wobei die Beleuchtungseinheit 100 ein Gehäuse 101 mit einer Gehäuseöffnung 102 sowie eine die Gehäuseöffnung 102 verschließende Abdeckscheibe 103 aufweist.

In dem Gehäuse 101 sind zwei langgestreckte Lichtleiter 1 angeordnet, wobei jedem Lichtleiter 1 eine Lichtquelle 2 zugeordnet ist, wie dies an Hand von einem der Lichtleiter 1 in **Figur 2** gezeigt ist. Bei der Lichtquellen 2 handelt es sich üblicherweise um LED-Lichtquellen, wobei eine solche LED-Lichtquelle eine oder mehrere Leuchtdioden (LED's) aufweist. Prinzipiell können auch andere Lichtquellen verwendet werden.

Generell ist anzumerken, dass **Figur 1** lediglich ein Beispiel mit in diesem Fall zwei Lichtleitern zeigt. Genauso umfasst die Erfindung auch Beleuchtungsvorrichtungen mit nur einem oder auch mit mehreren Lichtleitern.

Die beiden Lichtleiter 1 werden in dem Gehäuse 101 beispielhaft von einem Halter 15 gehalten. Der Halter 15 kann mit dem Gehäuse 101 verklipst oder anderweitig an diesem befestigt werden.

Jedem der Lichtleiter 1 ist in Lichtaustrittsrichtung X eine Optik 300 nachgeschaltet, wie dies in **Figur 1** gezeigt ist. Die Optiken können natürlich auch einstückig ausgebildet sein. Bei diesen Optiken handelt sich beispielsweise um sogenannte Dickwandoptiken, in welche die Lichtleiter 1 das von ihnen abgestrahlte einspeisen. In den Optikkörpern 300 pflanzt sich dieses Licht, beispielsweise mittels Totalreflexion, fort und tritt an einer Vorderseite des jeweiligen Optikkörpers 300 aus und wird durch die Abdeckscheibe 103 in einen Bereich vor der Beleuchtungseinheit 100 abgestrahlt, wo es eine gewünschte Lichtverteilung oder einen Teil einer Lichtverteilung oder eine Signalisierungsfunktion erzeugt.

Die durch einen Lichtleiter 1, 2 erzeugte Lichtverteilung ist eher breiter gestreut, die Dickwandoptik sammelt das Licht durch Totalreflexion und bildet dadurch an ihrer Vorderseite, an welcher das Licht austritt, eine scharf begrenzte leuchtende Fläche.

An Stelle der Dickwandoptik kann z.B. auch eine Streuscheibe vorgesehen sein.

Die Abdeckscheibe kann völlig klar sein, kann aber auch eine optische Struktur zur Beeinflussung des durch sie durchtretenden Lichtes aufweisen.

Die in dem vorliegenden Beispiel gezeigte Beleuchtungseinheit ist zur Realisierung eines Tagfahrlichtes vorgesehen, welches typischer Weise einen möglichst homogenen, durch seine Form charakteristischen Leuchteindruck aufweisen soll. Es können mit einer erfindungsgemäßen Beleuchtungseinheit aber auch andere Lichtfunktionen, z.B. ein Fahrtrichtungsanzeiger, Bremslicht, Schlusslicht, Positionslicht, Nebelschlusslicht usw. realisiert werden.

**Figur 2****,** wie schon angesprochen, zeigt einen Lichtleiter 1 der Beleuchtungseinheit 100, mit einer Lichtquelle 2, welche beispielsweise auf einem Kühlkörper 17 angeordnet ist. Der Lichtleiter 1 besteht aus einem optisch transparenten Material, in welchem über einen Einkoppelbereich 10 Licht der Lichtquelle 2 in den Lichtleiter 1 eingekoppelt werden kann.

An seiner Vorderseite weist der Lichtleiter 1 eine Lichtauskoppelfläche 11 und an einer der Vorderseite gegenüberliegenden Rückseite eine Lichtumlenkfläche 12 auf, sodass von der Lichtquelle 2 in den Lichtleiter 1 eingekoppeltes Licht, welches sich in dem Lichtleiter 1 mittels Totalreflexion fortpflanzt, an der Lichtumlenkfläche 12 umgelenkt wird und über die Lichtauskoppelfläche 11 aus dem Lichtleiter 1 austreten kann.

Beispielsweise umfasst die Lichtumlenkfläche 12 - allgemein, d.h. nicht auf die gezeigte Ausführungsform beschränkt - in bekannter Art und Weise eine Vielzahl an prismatischen, vorzugsweise nebeneinander angeordneten Elementen, welche auf der Lichtumlenkfläche 12 auftreffendes Licht, das sich entlang des Lichtleiters 1 in diesem fortpflanzt, zu der Vorderseite umlenken, wo es über die Lichtauskoppelfläche/Lichtaustrittsfläche 11 wie oben schon beschrieben austreten kann.

Weiters weist der Lichtleiter 1 in einem Endabschnitt 20 eine den Lichtleiter 1 begrenzende Abschlussfläche 21 auf. Die Abschlussfläche 21 ist aus einem lichtdurchlässigen Material des Lichtleiters 1 gebildet.

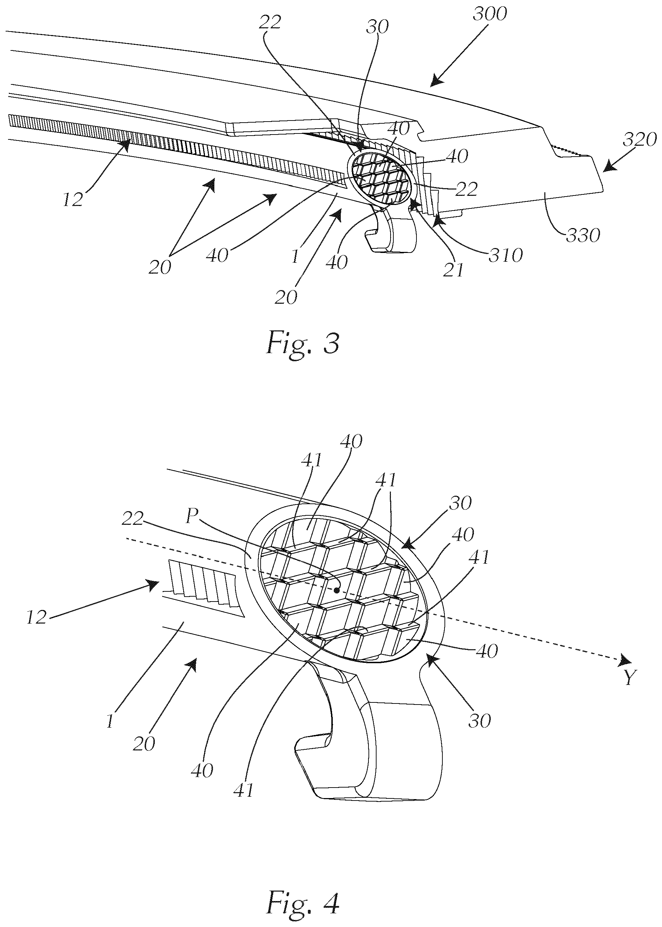

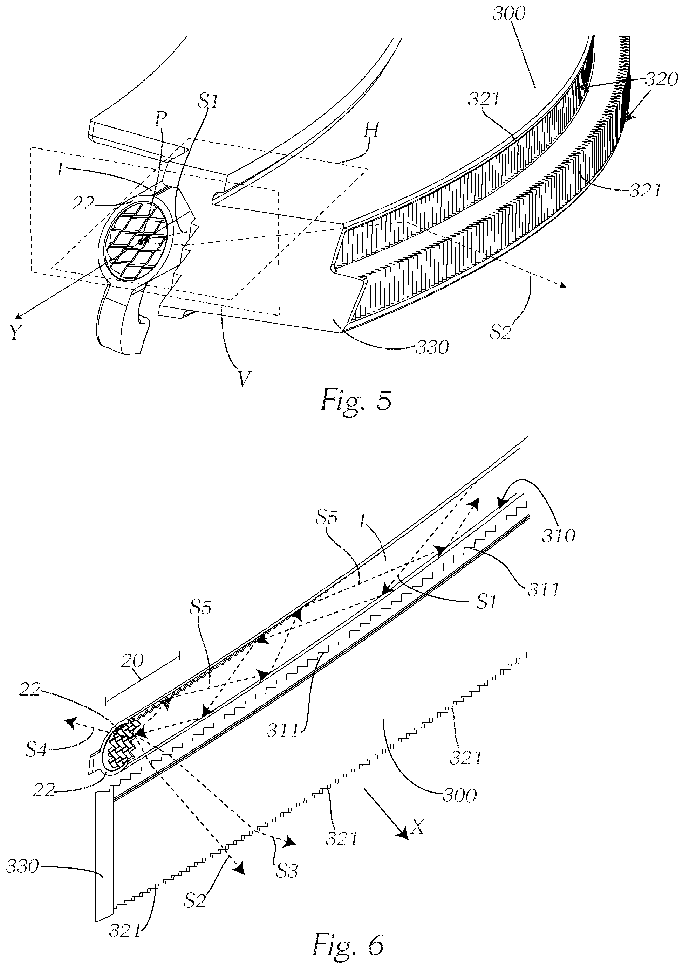

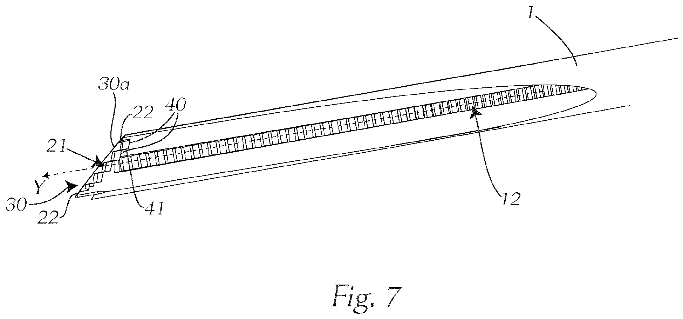

Um, wie eingangs beschrieben, Hotspots im Warmerscheinungsbild des Lichtleiters 1, welche auch in der vorgeschalteten Optik 300 erkennbar sind, zu vermeiden, ist vorgesehen, dass - wie dies insbesondere in **Figur 3** und **Figur 4** sowie den **Figuren 5** - **7** gut zu erkennen ist - die Form der Abschlussfläche 21 der Form einer virtuellen Grundfläche 30 folgt, wobei zumindest in Bereichen der virtuellen Grundfläche 30 gezielte Abweichungen von der Form der virtuellen Grundfläche 30 vorgesehen sind. Diese gezielten Abweichungen ergeben sich durch mehrere Optikflächensegmente 40, sodass die Abschlussfläche 21 in den Bereichen, wo eine gezielte Abweichung vorliegt, von den Optikflächensegmenten 40 gebildet ist und in den Bereichen ohne Abweichung der virtuellen Grundfläche 30 entspricht.

Die Optikflächensegmente 40, d.h. deren Form und Anordnung, bzw. das von jedem einzelnen Oberflächensegment 40 gebildete Abschlussflächensegment weicht derart von der virtuellen Grundfläche 30 ab, dass aus jedem Optikflächensegment 40 mehr Licht aus dem Lichtleiter 1 austreten kann als über ein zu dem jeweiligen Optikflächensegment 40 korrespondierendes virtuelles Grundform-Flächensegment 30a, und/oder jedes Optikflächensegment 40 Licht, welches sich in dem Lichtleiter 1 bis zu der Abschlussfläche 21 fortpflanzt, derart reflektiert, dass in einem Endabschnitt 20 des Lichtleiters 1 die pro Flächeneinheit aus der Lichtauskoppelfläche 11 austretende Lichtmenge geringer ist als dies bei Reflexion an der virtuellen Grundfläche 30 der Fall wäre.

Das zu einem jeweiligen Optikflächensegment 40 korrespondierende virtuelle Grundform-Flächensegment 30a ergibt sich dabei beispielsweise durch Projektion dieses Optikflächensegmentes 40 auf die virtuelle Grundfläche 30.

**Figur 5** und insbesondere **Figur 6** zeigen beispielhaft Lichtstrahlen in dem Lichtleiter 1. Zu erkennen ist ein exemplarischer Lichtstrahl S1, welcher sich in dem Lichtleiter 1 bis zu der Abschlussfläche 21 fortgepflanzt hat und auf diese auftrifft.

Würde die Abschlussfläche durchgehend aus der virtuellen Grundfläche 30, beispielsweise einer Ebene, die schräg zu der zentralen Längsachse Y des Lichtleiters 1 geneigt ist, gebildet sein, würde der Lichtstrahl S1 reflektiert und wie gezeigt als Lichtstrahl S2 aus dem Lichtleiter 1 aus- und durch die Optik 300 durchtreten.

Ohne Optikelemente würden die meisten Lichtstrahlen, die unter einem ähnlichen Winkel wie Lichtstrahl S1 auf die Abschlussfläche, wie Lichtstrahl S2 reflektiert werden, wodurch sich ein intensiver Hotspot ergeben kann.

Mit den Optikflächenelementen 40, wie dargestellt, kann das auf der Abschlussfläche auftreffende Licht aufgeteilt werden. Ein Teil des Lichtes wird nach wie vor wie Lichtstrahl S2 reflektiert, z.B. das auf dem Randbereich 22, welcher der Form der virtuellen Grundfläche 30 folgt, auftreffende Licht. Andere Lichtstrahlen, welche auf Optikelemente 40 auftreffen, werden hingegen beispielsweise wie Lichtstrahl S3 reflektiert. Auf diese Weise können an der Abschlussfläche 21 Lichtstrahlen reflektierte durch geeignete Anordnung und/oder Ausgestaltung der Optikflächenelemente 40 über den Endbereich 20 oder darüber hinaus "verteilt" werden, sodass Hotspots vermieden oder deren Intensität deutlich reduziert werden kann.

Alternativ oder zusätzlich ist es weiters möglich, dass Lichtstrahlen S4 über Optikflächenelemente 40 über die Abschlussfläche 21 aus dem Lichtleiter 1 austreten und nicht zu einem Hotspot beitragen können.

Alternativ oder zusätzlich ist es außerdem noch möglich, dass Lichtstrahlen S5 über Optikflächenelemente 40 wieder in den Lichtleiter 1 zurückreflektiert werden und so nicht zu einem Hotspot beitragen können.

Idealer Weise werden die Optikflächenelemente 40 derart ausgelegt, dass alle diese Effekte gemeinsam auftreten.

Es sei angemerkt, dass der gezeigte Strahlenverlauf als rein schematisch anzusehen ist und lediglich die prinzipielle Funktionsweise der Erfindung prinzipiell erörtern soll.

Konkret kann, wie gezeigt, vorgesehen sein, dass die Optikflächensegmente 40 zu der virtuellen Grundfläche 30 geneigt angeordnet sind.

Insbesondere kann vorgesehen sein, dass jedes Optikflächensegment 40 hinsichtlich seiner Neigung individuell angeordnet und/oder hinsichtlich seiner Form und/oder hinsichtlich seiner Größe, insbesondere der Größe seiner Fläche individuell ausgebildet ist.

Die Optikflächensegmente können hinsichtlich eines, mehrerer oder aller er oben angeführten Parameter (Neigung, Form, Größe) auch identisch ausgebildet sein, dies vereinfacht die Berechnung und/oder Herstellung. Eine individuelle Ausgestaltung der Optikflächensegmente hinsichtlich eines, mehrerer oder aller der oben angeführten Parameter kann eine noch zielgerichtetere Reduzierung bzw. Vermeidung von Hotspots erlauben.

Die Optikflächensegmente 40 sind derart geneigt, dass mehr Licht aus dem jeweiligen Optikflächensegment 40 und somit aus dem Lichtleiter 1 austreten kann als Licht aus der jeweiligen virtuellen Grundform 30 oder aus einem zu dem jeweiligen Optikflächensegment 40 korrespondierenden virtuellen Grundform-Flächensegment 30a austreten würde, und/oder Optikflächensegmente 40 derart geneigt sind, dass in einem Endbereich 20 des Lichtleiters 1, in Richtung der Längserstreckung des Lichtleiters 1 gesehen, das reflektierte Licht in einen größeren Bereich reflektiert wird als diese bei der virtuellen Grundfläche 30 oder bei einem zu dem jeweiligen Optikflächensegment 40 korrespondierenden virtuellen Grundform-Flächensegment 30a der Fall wäre.

Insbesondere kann dabei vorgesehen sein, dass die Optikflächensegmente 40 jeweils unter einem Winkel, dessen Betrag größer 0° und kleiner 90° gegenüber der zentralen Längsachse Y des Lichtleiters 1 geneigt sind.

Es kann je nach Situation zielführend sein, das Licht an den Flächen gezielt in eine bestimmte Richtung zu reflektieren (Flächen sind in diesem Fall vorzugsweise im Bereich 0° bis 45° zur Mittellinie, d.h. zu einer zentralen Längsachse des Lichtleiters geneigt) oder durch diese in eine bestimmte Richtung gelenkt auszutreten (vorzugsweise 45° bis 90° Anstellwinkel).

Es kann vorgesehen sein, dass alle Optikflächensegmente 40 wie gezeigt in dieselbe Richtung geneigt sind, oder ein oder mehrere Optikflächensegmente der Optikflächensegmente sind in eine Richtung und die anderen Optikflächensegmente in die entgegengesetzte Richtung geneigt.

Weiters kann vorgesehen sein, dass zwischen den Optikflächensegmenten 40, aufgrund eines Versatzes der Oberflächensegmente 40 zueinander in Richtung einer zentralen Längsachse Y des Lichtleiters 1, welcher beispielsweise durch eine Neigung der Optikflächensegmente 40 zur virtuellen Grundfläche 30 entsteht, Verbindungsflächen 41 angeordnet sind, wie dies insbesondere in **Figur 4** gut zu erkennen ist.

Der Winkel der Verbindungsflächen 41 bzw. Versatzflächen in Bezug auf die Längsachse Y des Lichtleiters kann bevorzugt bis 45° gehen. Auch größere Winkel können vorgesehen sein, sodass an derart geneigten Verbindungsflächen keine Reflexion, sondern ein Durchtreten der Lichtstrahlen mit entsprechender Lichtbrechung aus dem Lichtleiter heraus in eine gewünschte Richtung realisiert werden kann.

Beispielsweise kann vorgesehen sein, dass die virtuelle Grundfläche 30 gekrümmt, z.B. parabolisch, hyperbolisch, oder der Form eines Ellipsoids folgend, oder plan geformt ist.

Im gezeigten Beispiel ist die virtuelle Grundfläche 30 und somit auch der Randbereich 22 eine Ebene.

Es kann vorgesehen sein, dass die einzelnen Optikflächensegmente 40 wie gezeigt eben bzw. plan sind. Es kann auch vorgesehen sein, dass diese gekrümmt, z.B. parabolisch, hyperbolisch, oder der Form eines Ellipsoids folgend, geformt sind.

Es kann dabei vorgesehen sein, dass die Optikflächensegmente 40 in Bezug auf eine Lichtleiter-Vertikalebene V und/oder in Bezug eine Lichtleiter-Horizontalebene H geneigt sind, wobei die Ebenen V, H in **Figur 5** dargestellt sind.

Die Lichtleiter-Vertikalebene V ist eine Ebene, welche die Tangente an die zentrale Längsachse Y des Lichtleiters 1 im Durchstoßpunkt P durch die virtuelle Grundfläche 30 enthält, wobei diese Ebene z.B. in etwa normal auf die Lichtabstrahlrichtung des Lichtleiters 1 orientiert ist.

Die Lichtleiter-Horizontalebene H ist eine Ebene, welche die Tangente an die Längsachse Y des Lichtleiters 1 im Durchstoßpunkt P durch die virtuelle Grundfläche 30 enthält, wobei diese Ebene normal auf die Lichtleiter-Vertikalebene V orientiert ist.

Es sei an dieser Stelle angemerkt, dass die Bezeichnungen "vertikal" und "horizontal" dann korrekt sind, wenn der Lichtleiter in seiner Einbaulage in ein Kraftfahrzeug in etwa horizontal liegt, und beispielsweise quer zur Fahrtrichtung des Kraftfahrzeuges angeordnet ist. Wenn der Lichtleiter hingegen stehend angeordnet ist, sodass die Längserstreckung eher von oben nach unten verläuft, ist die hier als Lichtleiter-"Horizontal"ebene bezeichnete Ebene eine zweite Vertikalebene. Bei einer beliebig "verdrehten" Lage des Lichtleiters liegt weder die Lichtleiter-Vertikalebene V vertikal noch liegt die Lichtleiter-Horizontalebene H horizontal.

Beispielsweise ist vorgesehen, dass die Optikflächensegmente 40 rasterartig in Zeilen und Spalten angeordnet sind.

Die Abschlussfläche 21 weist in dem gezeigten Beispiel, wie bereits beschrieben, einen umlaufenden, in sich geschlossenen Randbereich 22 auf, welcher die Optikflächensegmente 40 umschließt. In dem Randbereich 22 ist eine Narbung, z.B. eine regelmäßig oder unregelmäßig geometrische Narbung, vorgesehen sein.

An diesem Randbereich, der fertigungstechnisch und/oder lichttechnisch sinnvoll und/oder notwendig sein kann, wird Licht nach wie vor in den Lichtleiter zurück reflektiert. Dies kann dazu genutzt werden, die Lichtmenge im Lichtleiter-Endbereich gezielt zu steuern. Falls zu viel Licht reflektiert wird, kann eine Narbung dahingehend Abhilfe schaffen, dass das reflektierte Licht stärker gestreut wird, sodass nachteilige Effekte durch eine Konzentration von Lichtstrahlen in einen bestimmten Bereich abgeschwächt oder vermieden werden.

Wie oben schon erläutert, kann eine Optik 300, etwa eine Streuscheibe oder wie gezeigt eine Dickwandoptik, in Lichtaustrittsrichtung X (beispielsweise bezeichnet die "Lichtaustrittsrichtung" des Lichtleiters 1 die resultierende Komponente aller aus dem Lichtleiter über die Lichtauskoppelfläche 11 austretenden Lichtstrahlen) nach der Lichtauskoppelfläche 11 des Lichtleiters 1 angeordnet sein. Vorzugsweise ist die Optik in Richtung zu dem Lichtleiter 1 beabstandet. Vorzugsweise ist vorgesehen, dass die Form der virtuellen Grundfläche 30 der Abschlussfläche 21 der Kontur einer Endfläche 330 der Optik 300 folgt, insbesondere mit dieser in einer gemeinsamen Ebene liegt.

Anders formuliert gehen die Form der virtuellen Grundfläche 30 der Abschlussfläche 21 und die Endfläche 330 "ineinander" über, d.h., wenn die virtuellen Grundfläche 30 gedanklich verlängert würde, schließt sie direkt, insbesondere stetig an die Endfläche 330 der Optik 300 an. Auf diese Weise kann die gesamte Optik 300 von dem Lichtleiter 1 beleuchtet werden.

Abschließend ist noch festgehalten, dass die Optik 300 wie gezeigt eine optische Lichteintrittsfläche 310 aufweist, welche dazu eingerichtet ist, einfallende Lichtstrahlen in die Optik 300 hinein zu brechen. Licht bzw. Lichtstrahlen, welches aus der Lichtauskoppelfläche 11 des Lichtleiters 1 austreten, treffen auf die Lichteintrittsfläche 310 der Optik 300 auf, treten durch die Optik 300, d.h. durch den aus einem optisch transparenten Material gebildeten Körper, welcher die Optik 300 bildet, durch und treten an einer Lichtaustrittsfläche 320 der Optik 300 zur Bildung einer Signalisierungsfunktion und/oder einer Lichtverteilung wieder aus.

Beispielsweise ist optische Lichteintrittsfläche 310 in Form einer Ebene oder plan ausgebildet ist, und/oder sie verläuft parallel zu der Lichtauskoppelfläche 11 des Lichtleiters 1.

Es kann vorgesehen sein, dass die Optik 300 mehrere optische Elemente 311, 321, z.B. optische Elemente 311 auf der optischen Lichteintrittsfläche 310 und/oder optische Elemente 321 auf der der Lichteintrittsfläche 310 abgewandten Optik-Lichtaustrittfläche 320, aufweist, z.B. Mikrooptiken und/oder Polsteroptiken und/oder Facettenoptiken, wobei vorzugsweise die optischen Elemente 311 auf der Lichteintrittsfläche 310 dazu eingerichtet sind, einfallendes Licht zu streuen, und/oder wobei die optischen Element der Optik-Lichtaustrittfläche dazu einrichtet sind, das über die Optik-Lichtaustrittfläche austretende Licht in eine geforderte Richtung abzustrahlen und/oder noch etwas aufzufächern bzw. aufzustreuen wird.

Die "zentrale Achse " Y eines Lichtleiters ist dabei z.B. eine Achse in Längserstreckung des Lichtleiters, die jeweils die geometrischen Mittelpunkte der Querschnittsflächen entlang der Längserstreckung des Lichtleiters, welche normal auf diese Achse stehen, verbindet.

## Patentansprüche

1. Beleuchtungsvorrichtung (100) für ein Kraftfahrzeug zur Erzeugung von zumindest einer Beleuchtungsfunktion und/oder Signalisierungsfunktion, wobei die Beleuchtungseinheit (100) ein Gehäuse (101) mit einer Gehäuseöffnung (102) aufweist, wobei die Gehäuseöffnung (102) beispielsweise von einer Abdeckscheibe (103) verschlossen ist, wobei in dem Gehäuse (101)
- zumindest ein langgestreckter Lichtleiter (1) und zumindest eine dem zumindest einen Lichtleiter (1) zugeordnete Lichtquelle (2) angeordnet sind, wobei Licht der zumindest einen Lichtquelle (2) über einen Einkoppelbereich (10) des zumindest einen Lichtleiters (1) in den Lichtleiter (1) eingekoppelt werden kann,
- wobei der zumindest eine Lichtleiter (1) an seiner Vorderseite eine Lichtauskoppelfläche (11) und an einer der Vorderseite gegenüberliegenden Rückseite eine Lichtumlenkfläche (12) aufweist, sodass von der zumindest einen Lichtquelle (2) in den zumindest einen Lichtleiter (1) eingekoppeltes Licht an der Lichtumlenkfläche (12) umgelenkt und über die Lichtauskoppelfläche (11) aus dem Lichtleiter (1) abgestrahlt wird,
wobei
der zumindest eine Lichtleiter (1) in einem Endabschnitt (20) eine den Lichtleiter (1) begrenzende Abschlussfläche (21) aufweist, und wobei
die Beleuchtungsvorrichtung (100) weiters eine Optik (300), etwa eine Streuscheibe oder eine Dickwandoptik, umfasst, welche in Lichtaustrittsrichtung (X) nach der Lichtauskoppelfläche (11) des Lichtleiters (1) angeordnet ist, und
die Form der Abschlussfläche (21) der Form einer virtuellen Grundfläche (30) folgt,
wobei die Form der virtuellen Grundfläche (30) der Abschlussfläche (21) einer Kontur einer Endfläche (330) der Optik (300) folgt, insbesondere mit dieser in einer gemeinsamen Ebene liegt, und
wobei die virtuelle Grundfläche (30), beispielsweise eine Ebene, schräg zu einer zentralen Längsachse (Y) des Lichtleiters (1) geneigt ist, und
wobei zumindest in Bereichen der virtuellen Grundfläche (30) gezielte Abweichungen von der Form der virtuellen Grundfläche (30) vorgesehen sind, indem mehrere Optikflächensegmente (40) vorgesehen sind,
wobei die Abschlussfläche (21) in den Bereichen, wo eine gezielte Abweichung vorliegt, von den Optikflächensegmenten (40) gebildet ist und in den Bereichen ohne Abweichung der virtuellen Grundfläche (30) entspricht,
und wobei die Optikflächensegmente (40) zu der virtuellen Grundfläche (30) geneigt angeordnet sind, , sodass
- aus einem, mehreren oder vorzugsweise aus jedem Optikflächensegment (40) mehr Licht aus dem Lichtleiter (1) austreten kann als über ein zu dem jeweiligen Optikflächensegment (40) korrespondierendes virtuelles Grundform-Flächensegment (30a), und/oder
- ein, mehrere oder vorzugsweise jedes Optikflächensegment (40) Licht, welches sich in dem Lichtleiter (1) bis zu der Abschlussfläche (21) fortpflanzt, derart reflektiert, dass in einem Endabschnitt (20) des Lichtleiters (1) die pro Flächeneinheit aus der Lichtauskoppelfläche (11) austretende Lichtmenge geringer ist als dies bei Reflexion an der virtuellen Grundfläche (30) der Fall wäre,
und wobei die Abschlussfläche (21) in einem Randbereich (22), insbesondere in einem umlaufenden, in sich geschlossenen Randbereich (22), welcher die Optikflächensegmente (40) umschließt, der virtuellen Grundfläche (30) entspricht, wobei in dem Randbereich (22) eine Narbung, z.B. eine regelmäßig oder unregelmäßig geometrische Narbung, vorgesehen ist.

2. Beleuchtungsvorrichtung nach Anspruch 1, wobei die Optikflächensegmente (40) derart von der virtuellen Grundfläche (30) abweichen, dass in einem Endbereich des Lichtleiters (1), in Richtung der Längserstreckung des Lichtleiters (1) gesehen, das reflektierte Licht in einen größeren Bereich reflektiert wird als dies bei der virtuellen Grundfläche (30) der Fall wäre.

3. Beleuchtungsvorrichtung nach Anspruch 1 oder 2, wobei jedes Optikflächensegment (40) hinsichtlich seiner Neigung individuell angeordnet und/oder hinsichtlich seiner Form und/oder hinsichtlich seiner Größe, insbesondere der Größe seiner Fläche individuell ausgebildet ist.

4. Beleuchtungsvorrichtung nach Anspruch 3, wobei Optikflächensegmente (40) derart geneigt sind, dass mehr Licht aus dem jeweiligen Optikflächensegment (40) austreten kann als Licht aus der jeweiligen virtuellen Grundform (30) oder aus einem zu dem jeweiligen Optikflächensegment (40) korrespondierenden virtuellen Grundform-Flächensegment (30a) austreten würde, und/oder Oberflächensegmente derart geneigt sind, dass in einem Endbereich des Lichtleiters, in Richtung der Längserstreckung des Lichtleiters gesehen, das reflektierte Licht in einen größeren Bereich reflektiert wird als diese bei der virtuellen Grundfläche oder bei einem zu dem jeweiligen Optikflächensegment korrespondierenden virtuellen Grundform-Flächensegment der Fall wäre.

5. Beleuchtungsvorrichtung nach Anspruch 3 oder 4, wobei die Optikflächensegmente (40) jeweils unter einem Winkel, dessen Betrag größer 0° und kleiner 90° gegenüber einer zentralen Längsachse (Y) des Lichtleiters geneigt sind.

6. Beleuchtungsvorrichtung nach einem der Ansprüche 3 bis 5, wobei alle Optikflächensegmente in dieselbe Richtung geneigt sind, oder ein oder mehrere Optikflächensegmente der Optikflächensegmente in eine Richtung und die anderen Optikflächensegmente in die entgegengesetzte Richtung geneigt sind.

7. Beleuchtungsvorrichtung nach einem der Ansprüche 1 bis 6, wobei zwischen den Optikflächensegmenten (40), aufgrund eines Versatzes der Oberflächensegmente (40) zueinander in Richtung einer zentralen Längsachse (Y) des Lichtleiters (1), welcher beispielsweise durch eine Neigung der Optikflächensegmente (40) zur virtuellen Grundfläche (30) entsteht, Verbindungsflächen (41) angeordnet sind.

8. Beleuchtungsvorrichtung nach einem der Ansprüche 1 bis 7, wobei die virtuelle Grundfläche (30) gekrümmt, z.B. parabolisch, hyperbolisch, oder der Form eines Ellipsoids folgend, oder plan geformt ist.

9. Beleuchtungsvorrichtung nach einem der Ansprüche 1 bis 8, wobei die virtuelle Grundform (30) aus einer oder mehreren Flächenbereichen gebildet ist, wobei vorzugsweise jeder Flächenbereich in sich stetig ist, und wobei unterschiedlichen Flächenbereiche beispielsweise unstetig, z.B. stufenförmig, aneinander anschließen bzw. ineinander übergehen.

10. Beleuchtungsvorrichtung nach einem der Ansprüche 1 bis 9, wobei die einzelnen Optikflächensegmente (40) eben bzw. plan oder gekrümmt, z.B. parabolisch, hyperbolisch, oder der Form eines Ellipsoids folgend, geformt sind.

11. Beleuchtungsvorrichtung nach einem der Ansprüche 1 bis 10, wobei die Optikflächensegmente (40) in Bezug auf eine Lichtleiter-Vertikalebene (V) und/oder in Bezug auf eine Lichtleiter-Horizontalebene (H) geneigt sind, wobei beispielsweise manche der oder alle Optikflächensegmente (40) in Bezug auf die Lichtleiter-Vertikalebene (V) unter einem anderen Winkel geneigt sind als zu der Lichtleiter-Horizontalebene (H).

12. Beleuchtungsvorrichtung nach einem der Ansprüche 1 bis 11, wobei die Optikflächensegmente (40) rasterartig in Zeilen und Spalten angeordnet sind.

13. Kraftfahrzeugscheinwerfer mit zumindest einer Vorrichtung gemäß einem der Ansprüche 1 bis 12.

## Claims

1. Lighting device (100) for a motor vehicle for generating at least one lighting function and/or signaling function, wherein the lighting unit (100) has a housing (101) with a housing opening (102), wherein the housing opening (102) is closed, for example, by a cover plate (103), wherein at least one elongated light guide (1) and at least one light source (2) associated with the at least one light guide (1) are arranged in the housing (101), wherein light from the at least one light source (2) is guided through the light guide (1) and emitted through the cover plate (103)
- at least one elongated light guide (1) and at least one light source (2) associated with the at least one light guide (1) are arranged, wherein light from the at least one light source (2) can be coupled into the light guide (1) via a coupling area (10) of the at least one light guide (1),
- wherein the at least one light guide (1) has a light coupling surface (11) on its front side and a light deflection surface (12) on a rear side opposite the front side, so that light coupled into the at least one light guide (1) from the at least one light source (2) (1) is deflected at the light deflection surface (12) and emitted from the light guide (1) via the light coupling surface (11),
wherein
the at least one light guide (1) has a terminating surface (21) in an end section (20) which delimits the light guide (1), and wherein
the illumination device (100) further comprises an optical system (300), such as a diffuser or a thick-walled optical element, which is arranged in the light exit direction (X) after the light coupling surface (11) of the light guide (1), and
the shape of the end surface (21) follows the shape of a virtual base surface (30),
wherein the shape of the virtual base surface (30) of the end surface (21) follows a contour of an end surface (330) of the optics (300), in particular lies in a common plane with the latter, and
wherein the virtual base surface (30), for example a plane, is inclined at an angle to a central longitudinal axis (Y) of the light guide (1), and
wherein, at least in areas of the virtual base surface (30), specific deviations from the shape of the virtual base surface (30) are provided by providing a plurality of optical surface segments (40),
wherein the end surface (21) is formed by the optical surface segments (40) in the areas where there is a specific deviation and corresponds to the virtual base surface (30) in the areas without deviation,
and wherein the optical surface segments (40) are arranged at an angle to the virtual base surface (30) so that
- more light can exit the light guide (1) from one, several, or preferably each optical surface segment (40) than via a virtual basic shape surface segment (30a) corresponding to the respective optical surface segment (40), and/or
- one, several or preferably each optical surface segment (40) reflects light propagating in the light guide (1) up to the end surface (21) in such a way that in an end section (20) of the light guide (1) the amount of light emerging from the light coupling surface (11) per surface unit is less than would be the case with reflection at the virtual base surface (30),
and wherein the end surface (21) corresponds to the virtual base surface (30) in an edge region (22), in particular in a circumferential, self-enclosed edge region (22) which surrounds the optical surface segments (40), corresponds to the virtual base surface (30), wherein a grain, e.g. a regular or irregular geometric grain, is provided in the edge region (22).

2. Lighting device according to claim 1, wherein the optical surface segments (40) deviate from the virtual base surface (30) in such a way that in an end region of the light guide (1), viewed in the direction of the longitudinal extension of the light guide (1), the reflected light is reflected into a larger area than would be the case with the virtual base area (30).

3. Lighting device according to claim 1 or 2, wherein each optical surface segment (40) is individually arranged with regard to its inclination and/or individually designed with regard to its shape and/or size, in particular the size of its surface area.

4. Lighting device according to claim 3, wherein optical surface segments (40) are inclined in such a way that more light can emerge from the respective optical surface segment (40) than light would emerge from the respective virtual basic shape (30) or from a virtual basic shape surface segment (30a) corresponding to the respective optical surface segment (40), and/or surface segments are inclined such that, in an end region of the light guide, viewed in the direction of the longitudinal extension of the light guide, the reflected light is reflected into a larger area than would be the case with the virtual base surface or with a virtual base shape surface segment corresponding to the respective optical surface segment.

5. Lighting device according to claim 3 or 4, wherein the optical surface segments (40) are each inclined at an angle whose magnitude is greater than 0° and less than 90° relative to a central longitudinal axis (Y) of the light guide.

6. Lighting device according to one of claims 3 to 5, wherein all optical surface segments are inclined in the same direction, or one or more optical surface segments of the optical surface segments are inclined in one direction and the other optical surface segments are inclined in the opposite direction.

7. Lighting device according to one of claims 1 to 6, wherein connecting surfaces (41) are arranged between the optical surface segments (40) due to an offset of the surface segments (40) relative to each other in the direction of a central longitudinal axis (Y) of the light guide (1), which is created, for example, by an inclination of the optical surface segments (40) to the virtual base surface (30).

8. Lighting device according to one of claims 1 to 7, wherein the virtual base surface (30) is curved, e.g., parabolic, hyperbolic, or in the shape of an ellipsoid, or is flat.

9. Lighting device according to one of claims 1 to 8, wherein the virtual base shape (30) is formed from one or more surface areas, wherein preferably each surface area is continuous in itself, and wherein different surface areas are connected to each other or merge into each other in a discontinuous manner, e.g., in a stepped manner.

10. Lighting device according to one of claims 1 to 9, wherein the individual optical surface segments (40) are formed to be flat or curved, e.g., parabolic, hyperbolic, or in the shape of an ellipsoid.

11. Lighting device according to one of claims 1 to 10, wherein the optical surface segments (40) are inclined with respect to a light guide vertical plane (V) and/or with respect to a light guide horizontal plane (H), wherein, for example, some or all of the optical surface segments (40) are inclined at a different angle with respect to the light guide vertical plane (V) than with respect to the light guide horizontal plane (H).

12. Lighting device according to one of claims 1 to 11, wherein the optical surface segments (40) are arranged in rows and columns in a grid-like pattern.

13. Motor vehicle headlight with at least one device according to one of claims 1 to 12.

## Revendications

1. Dispositif d'éclairage (100) pour un véhicule automobile destiné à générer au moins une fonction d'éclairage et/ou une fonction de signalisation, l'unité d'éclairage (100) comportant un boîtier (101) avec une ouverture de boîtier (102), l'ouverture de boîtier (102) étant par exemple fermée par une vitre de recouvrement (103), dans lequel
- au moins un guide de lumière allongé (1) et au moins une source lumineuse (2) associée au au moins un guide de lumière (1) sont disposés, la lumière de la au moins une source lumineuse (2) pouvant être couplée dans le guide de lumière (1) via une zone de couplage (10) du au moins un guide de lumière (1),
- le guide de lumière (1) comportant sur sa face avant une surface de couplage de lumière (11) et sur sa face arrière opposée à la face avant une surface de déviation de lumière (12), de sorte que la lumière couplée depuis la source de lumière (2) dans le guide de lumière (1) est déviée au niveau de la surface de déviation de lumière (12) et émise hors du guide de lumière (1) via la surface de couplage de lumière (11),
dans lequel
le au moins un guide de lumière (1) présente, dans une partie d'extrémité (20), une surface d'extrémité (21) délimitant le guide de lumière (1), et dans lequel
le dispositif d'éclairage (100) comprend en outre une optique (300), par exemple une lentille de diffusion ou une optique à paroi épaisse, qui est disposée dans la direction de sortie de la lumière (X) après la surface de couplage de la lumière (11) du guide de lumière (1), et
la forme de la surface d'extrémité (21) suit la forme d'une surface de base virtuelle (30),
la forme de la surface de base virtuelle (30) de la surface d'extrémité (21) suivant le contour d'une surface d'extrémité (330) de l'optique (300), en particulier se trouvant dans un plan commun avec celle-ci, et
la surface de base virtuelle (30), par exemple un plan, étant inclinée par rapport à un axe longitudinal central (Y) du guide de lumière (1), et
des écarts ciblés par rapport à la forme de la surface de base virtuelle (30) étant prévus au moins dans certaines zones de la surface de base virtuelle (30) grâce à la présence de plusieurs segments de surface optique (40),
la surface d'extrémité (21) étant formée par les segments de surface optique (40) dans les zones où il existe un écart ciblé et correspondant à la surface de base virtuelle (30) dans les zones sans écart,
et les segments de surface optique (40) étant disposés de manière inclinée par rapport à la surface de base virtuelle (30), de sorte que
- à partir d'un, de plusieurs ou, de préférence, de chaque segment de surface optique (40), davantage de lumière peut sortir du guide de lumière (1) que par l'intermédiaire d'un segment de surface de forme de base virtuelle (30a) correspondant au segment de surface optique (40) respectif, et/ou
- un, plusieurs ou, de préférence, chaque segment de surface optique (40) réfléchit la lumière qui se propage dans le guide de lumière (1) jusqu'à la surface d'extrémité (21) de telle sorte que, dans une section d'extrémité (20) du guide de lumière (1), la quantité de lumière sortant de la surface de découplage de lumière (11) par unité de surface est inférieure à ce qui serait le cas en cas de réflexion sur la surface de base virtuelle (30),
et la surface d'extrémité (21) correspondant, dans une zone de bordure (22), en particulier dans une zone périphérique (22) fermée sur elle-même qui entoure les segments de surface optique (40), correspond à la surface de base virtuelle (30), un grain, par exemple un grain géométrique régulier ou irrégulier, étant prévu dans la zone périphérique (22).

2. Dispositif d'éclairage selon la revendication 1, les segments de surface optique (40) s'écartant de la surface de base virtuelle (30) de telle sorte que, dans une zone d'extrémité du guide de lumière (1), vu dans le sens longitudinal du guide de lumière (1), la lumière réfléchie est réfléchie dans une zone plus grande que ce ne serait le cas avec la surface de base virtuelle (30).

3. Dispositif d'éclairage selon la revendication 1 ou 2, dans lequel chaque segment de surface optique (40) est disposé individuellement en ce qui concerne son inclinaison et/ou est conçu individuellement en ce qui concerne sa forme et/ou sa taille, en particulier la taille de sa surface.

4. Dispositif d'éclairage selon la revendication 3, dans lequel les segments de surface optique (40) sont inclinés de telle sorte que davantage de lumière peut sortir du segment de surface optique (40) respectif que la lumière qui sortirait de la forme de base virtuelle (30) respective ou d'un segment de surface de forme de base virtuelle (30a) correspondant au segment de surface optique (40) respectif, et/ou les segments de surface sont inclinés de telle sorte que, dans une zone d'extrémité du guide de lumière, vue dans le sens longitudinal du guide de lumière, la lumière réfléchie est réfléchie dans une zone plus grande que ce ne serait le cas au niveau de la surface de base virtuelle ou d'un segment de surface de forme de base virtuelle correspondant au segment de surface optique respectif.

5. Dispositif d'éclairage selon la revendication 3 ou 4, dans lequel les segments de surface optique (40) sont chacun inclinés selon un angle dont la valeur est supérieure à 0° et inférieure à 90° par rapport à un axe longitudinal central (Y) du guide de lumière.

6. Dispositif d'éclairage selon l'une des revendications 3 à 5, dans lequel tous les segments de surface optique sont inclinés dans la même direction, ou un ou plusieurs segments de surface optique parmi les segments de surface optique sont inclinés dans une direction et les autres segments de surface optique sont inclinés dans la direction opposée.

7. Dispositif d'éclairage selon l'une des revendications 1 à 6, dans lequel des surfaces de liaison (41) sont disposées entre les segments de surface optique (40), en raison d'un décalage des segments de surface (40) les uns par rapport aux autres dans la direction d'un axe longitudinal central (Y) du guide de lumière (1), qui est par exemple créé par une inclinaison des segments de surface optique (40) par rapport à la surface de base virtuelle (30).

8. Dispositif d'éclairage selon l'une des revendications 1 à 7, dans lequel la surface de base virtuelle (30) est courbée, par exemple de forme parabolique, hyperbolique ou ellipsoïdale, ou plane.

9. Dispositif d'éclairage selon l'une des revendications 1 à 8, dans lequel la forme de base virtuelle (30) est formée d'une ou plusieurs zones de surface, chaque zone de surface étant de préférence continue en soi, et différentes zones de surface se raccordant les unes aux autres de manière discontinue, par exemple en gradins, ou se fondant les unes dans les autres.

10. Dispositif d'éclairage selon l'une des revendications 1 à 9, dans lequel les segments de surface optique individuels (40) sont plats ou courbes, par exemple paraboliques, hyperboliques ou de forme ellipsoïdale.

11. Dispositif d'éclairage selon l'une des revendications 1 à 10, dans lequel les segments de surface optique (40) sont inclinés par rapport à un plan vertical (V) du guide de lumière et/ou par rapport à un plan horizontal du guide de lumière (H), certains ou tous les segments de surface optique (40) étant par exemple inclinés par rapport au plan vertical (V) du guide de lumière sous un angle différent de celui par rapport au plan horizontal (H) du guide de lumière.

12. Dispositif d'éclairage selon l'une des revendications 1 à 11, les segments de surface optique (40) étant disposés en rangées et en colonnes à la manière d'une grille.

13. Projecteur de véhicule automobile comportant au moins un dispositif selon l'une des revendications 1 à 12.
